(19) Europäisches Patentamt
European Patent Office
Office européen des brevets

(11) EP 0 824 984 B1

(12) EUROPÄISCHE PATENTSCHRIFT

(45) Veröffentlichungstag und Bekanntmachung des Hinweises auf die Patenterteilung:
22.12.1999 Patentblatt 1999/51

(51) Int. Cl.$^6$: **B23D 25/12**, B23D 36/00

(21) Anmeldenummer: 97113088.5

(22) Anmeldetag: 30.07.1997

(54) **Verfahren und Vorrichtung zum Betrieb von rotierenden Anlaufscheren**

Process and device for driving rotating cropping shears

Procédé et appareillage pour l'exploitation de cisailles rotatives d'éboutage

(84) Benannte Vertragsstaaten:
AT DE GB IT SE

(30) Priorität: 19.08.1996 DE 19633308

(43) Veröffentlichungstag der Anmeldung:
25.02.1998 Patentblatt 1998/09

(73) Patentinhaber:
SMS SCHLOEMANN-SIEMAG
AKTIENGESELLSCHAFT
40237 Düsseldorf (DE)

(72) Erfinder:
• Grenz, Günter. Dipl.-Ing.
40670 Meerbusch (DE)
• Küppers, Klaus
40699 Erkrath (DE)
• Palzer, Otmar, Dr.-Ing.
41363 Jüchen (DE)

(74) Vertreter:
Valentin, Ekkehard, Dipl.-Ing.
Patentanwälte
Hemmerich-Müller-Grosse-
Pollmeier-Valentin-Gihske
Hammerstrasse 2
57072 Siegen (DE)

(56) Entgegenhaltungen:
EP-A- 0 532 820          DE-A- 3 020 084
DE-A- 3 042 171          DE-B- 1 004 451
US-A- 3 759 117

• PATENT ABSTRACTS OF JAPAN vol. 10, no. 249 (M-511), 27.August 1986 & JP 61 079516 A (ISHIKAWAJIMA HARIMA HEAVY IND CO LTD), 23.April 1986,

**Beschreibung**

Die Erfindung betrifft ein Verfahren und eine Vorrichtung zum Betrieb von rotierenden Anlaufscheren gemäß dem Oberbegriff des Patentanspruchs 1, bzw. 5 und wie z.B. aus DE-A-3 020 084 bekannt.

Wichtig ist beim Betrieb derartiger Scheren, daß die Scherenmesser zumindest während des Schnittes eine solche Umfangsgeschwindigkeit haben, daß sie mit der Auslaufgeschwindigkeit des zu durchtrennenden Walzgutes übereinstimmt, weil sich sonst kein ordnungsgemäßer Trennschnitt durchführen läßt und sich Betriebsstörungen einstellen können.

Bekannte Scheren, wie die in der DE 30 20 084 A1 und in der DE 30 42 171 A1 beschriebenen Trommelscheren mit zwei Messertrommeln werden von einem Motor über eine Getriebeanordnung gemeinsam angetrieben. Dies hat bei solchen Scheren, die einen großen Geschwindigkeitsbereich abdecken müssen, folgende Nachteile:

a) bei hohen Walzgutgeschwindigkeiten mit dünnem Walzgut ergeben sich hohe Motordrehzahlen. Die damit zur Verfügung stehende hohe kinetische Energie im Schnittbereich ist nicht erforderlich, führt aber zwangsläufig trotz der geringen benötigten Schneidarbeit zu einer hohen Antriebsleistung.

b) Bei niedrigen Walzgutgeschwindigkeiten und dickem Walzgut ergeben sich für die Schere gleichfalls niedrige Motordrehzahlen. Die damit im Schnittbereich zur Verfügung stehende niedrige kinetische Energie ist dann oft nicht ausreichend, um die Schneidarbeit zu verrichten. Zur Behebung dieser Schwierigkeit muß deshalb ein größerer Motor mit entsprechend höherer Antriebsleistung ausgewählt werden, der dann bei dünnem Walzgut und hohen Walzgutgeschwindigkeiten überdimensioniert ist.

Ein weiterer Nachteil derartig ausgelegter Antriebe ist, daß der Schnitt erst nach Erreichen der jeweils erforderlichen maximalen Scherengeschwindigkeit erfolgt, was bedeutet, daß das maximale Motormoment bei Schnittbeginn nicht zur Verfügung steht. Dies bewirkt, daß der Motor zunächst in seiner Drehzahl einbricht und erst gegen Schnittende Solldrehzahl und maximales Motormoment wieder erreicht werden.

Aufgabe der Erfindung ist es, bekannte Anlaufscheren unter Vermeidung der geschilderten Nachteile so weiterzubilden, daß bei unterschiedlichen Walzgutgeschwindigkeiten und unterschiedlichen Walzgutquerschnitten ein optimaler Schnitt mit dem maximalen Motormoment möglich ist.

Die gestellte Aufgabe wird verfahrensmäßig gelöst mit den Maßnahmen des Kennzeichnungsteils des Anspruchs 1 und vorrichtungsmäßig mit den Merkmalen des Kennzeichnungsteiles des Anspruchs 5. Vorteilhafte Ausgestaltungen der Erfindung werden in den Unteransprüchen angegeben.

Durch die erfindungsgemäße Maßnahme, zwischen dem Scherengetriebe und dem Antriebsmotor ein Schaltgetriebe anzuordnen, verbunden jeweils über eine drehsteife Kupplung, wird es möglich, im Arbeitsbereich mit hohen Walzgutgeschwindigkeiten und kleinen Walzgutquerschnitten eine kleine Übersetzung und bei langsamen Walzgutgeschwindigkeiten und größeren Walzgutquerschnitten eine größere Übersetzung auszuwählen. Durch diese erfindungsgemäße Maßnahme wird es erstmals möglich, die Anlaufschere mit folgenden miteinander verknüpften Arbeitsschritten zu regeln:

a) Anfahren der Schere mit einem geringen Antriebsmoment ($M_1$), daß etwa 10 % des Nennmoments (Mn) entspricht, während des kurzen Zeitraums, der zur Eliminierung des Getriebe- und Kupplungsspiels erforderlich ist. Die Dauer des Anfahrens hängt von der Größe des Getriebe- und Kupplungsspiels ab und beträgt ca. 10 ms. Durch diese erfindungsgemäße Maßnahme wird eine starke Stoßbelastung der Schere kurz nach dem Start vermieden; durch das stoßfreie Hochfahren der Schere werden zusätzliche Vibrationen und Überlastungen der Scherenmechanik weitgehend unterdrückt und die Lebensdauer der Kräfte übertragenden Teile beträchtlich gesteigert.

b) Konstante Beschleunigung der Schere nach dem Anfahren mit maximaler Steilheit und maximalem Beschleunigungsmoment ($M_2$) auf die Scherensollgeschwindigkeit ($v_S$), für alle Walzgutgeschwindigkeiten und Walzgutquerschnitte, wobei die Scherensollgeschwindigkeit ($v_S$) größer als die Geschwindigkeit des Walzgutes ($v_M$) gewählt ist (voreilende Schere). Auch bei großen Walzgutquerschnitten, wo höhere Momente zum Schneiden gebraucht werden, steht somit bereits am Schnittanfang das volle Beschleunigungsmoment zur Verfügung.

c) Beginn des Schnitts kurz vor Erreichen der Scherensollgeschwindigkeit ($v_S$) zu einem Zeitpunkt, bei dem die Scherengeschwindigkeit bereits größer als die Geschwindigkeit des Walzgutes ($v_M$) ist, um sicherzustellen, daß beim Schnittanfang gleich das volle Beschleunigungsmoment ($M_2$) zur Verfügung steht. Durch diese erfindungsgemäße Maßnahme wird keine Zeit zum Wiederaufbau dieses Moments bei einem Drehzahleinbruch verloren und der Drehzahleinbruch selbst wird minimiert.

d) Automatische Überwachung und Regelung der Scherenmesser-Umfangsgeschwindigkeit während des Schnitts, um eine optimale Scherenvoreilung aufrechtzuerhalten. Durch die automatische Überwachung der Scherenmesser-Umfangsgeschwindigkeit während des Schnitts wird der Betreiber in die Lage versetzt, bei auftretenden Störungen, beispielsweise bei Auftreten einer Biegung der Stabspitzen, in einfacher und schneller Weise zu beurteilen, ob die Scherenmessergeschwindigkeit infolge eines Drehzahleinbruchs als Ursache für diese Störung verantwortlich ist und er kann so schneller die tatsächliche Ursache für die Störung auffinden.

Die Regelung der Scherenmesser-Umfangsgeschwindigkeit während des Schnitts im Sinne einer optimalen Scherenvoreilung geschieht manuell durch den Betreiber, beispielsweise aufgrund akustischer und/oder visueller Signale, die durch das Geschwindigkeits-Überwachungsmeßgerät ausgelöst werden, oder aber die Regelung wird automatisch durch eine Regeleinheit vorgenommen, die zu diesem Zweck über Leitungen mit dem Überwachungsmeßgerät und dem Antriebsmotor verbunden ist.

Durch die erfindungsgemäßen Merkmale und Maßnahmen, die in der Zwischenschaltung eines Schaltgetriebes zwischen dem Scherengetriebe und dem Antriebsmotor begründet sind, ist also eine Scherenregelung möglich, die optimal auf unterschiedliche Walzgutquerschnitte und Walzgutgeschwindigkeiten angepaßt werden kann.

In weiterer vorteilhafter Ausgestaltung der Erfindung kann zur Anpassung der Scherensollgeschwindigkeit an die maximale Beschleunigung der Schere der Startzeitpunkt der Schere so verschoben werden, daß mit einem veränderten Beschleunigungsweg die gewünschte konstante maximale Beschleunigung aufrecht erhalten bleiben kann.

Um das Erwärmen der Scherenmesser durch das Walzgut bei kurzen Beschleunigungswegen zu verhindern, warten erfindungsgemäß die Scherenmesser dabei bis kurz vor dem Schnitt und vor ihrer Beschleunigung in einer wärmegünstigen Warteposition.

Weitere Einzelheiten, Merkmale und Vorteile der Erfindung ergeben sich aus den nachfolgenden Erläuterungen zu einem in schematischen Zeichnungsfiguren dargestellten Ausführungsbeispiel.

Es zeigen:

Fig. 1 schematische Anordnung des Scherenantriebes entsprechend dem Stand der Technik,

Fig. 2 schematische Anordnung des Scherenantriebes mit Zwischenanordnung eines Schaltgetriebes,

Fig. 3 Geschwindigkeit-Zeitdiagramm für den gesamten Schnittvorgang,

Fig. 4 Moment-Zeitdiagramm für den gesamten Schnittvorgang,

Fig. 5 Geschwindigkeit-Zeitdiagramm nur für die Scherenbeschleunigungsphase (Stand der Technik),

Fig. 6 Moment-Zeitdiagramm nur für die Scherenbeschleunigungsphase (Stand der Technik),

Fig. 7 Geschwindigkeit-Zeitdiagramm nur für die Scherenbeschleunigungsphase mit Zwischenanordnung eines Schaltgetriebes,

Fig. 8 Moment-Zeitdiagramm nur für die Scherenbeschleunigungsphase mit Zwischenanordnung eines Schaltgetriebes.

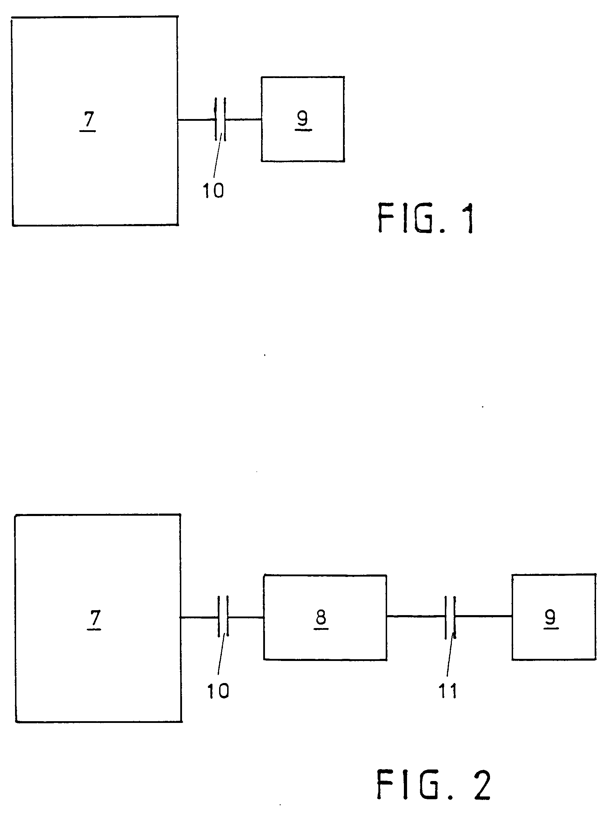

In der Figur 1 ist die schematische Anordnung des Antriebs einer Schere, wie sie in der DE 30 20 084 beschrieben ist, dargestellt. Der Antriebsmotor (9) ist hierbei über eine drehsteife Kupplung (10) direkt mit dem Scherengetriebe (7) gekoppelt.

Entsprechend der Figur 2 ist erfindungsgemäß zwischen dem Scherengetriebe (7) und dem Antriebsmotor (9) ein Schaltgetriebe (8) angeordnet, daß mit dem Scherengetriebe (7) über eine drehsteife Kupplung (10) und mit dem Antriebsmotor (9) über eine drehsteife Kupplung (11) verbunden ist. Durch diese erfindungsgemäße Maßnahme kann die Regelung der Schere mit den Stufen

- Anfahren der Schere

- Hochfahren der Schere

- Schnitt des Walzgutes

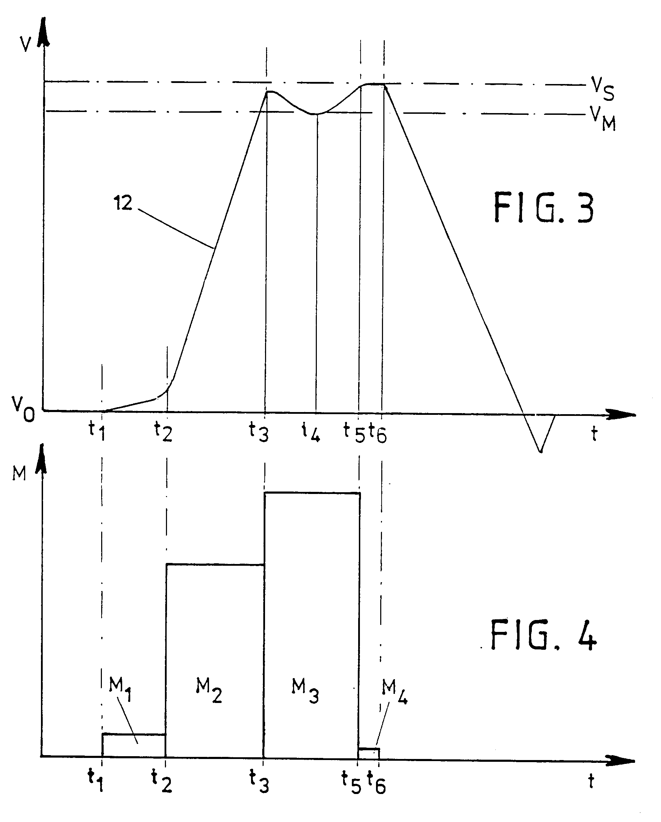

in optimaler Weise, unabhängig von der Walzgutgeschwindigkeit und dem Walzgutquerschnitt durchgeführt werden. Eine derartige Regelung wird an einem Ausführungsbeispiel in den Figuren 3 und 4 in Form eines Geschwindigkeit-Zeitdiagramms (Fig. 3) und eines Moment-Zeitdiagramms (Fig. 4) dargestellt.

Beginnend mit dem Start der Schere bei $t_1$ wird die Schere langsam mit dem Moment ($M_1$) angefahren bis zur Eliminierung des Getriebe- und Kupplungsspiels. Es folgt dann bei $t_2$ der Start der Maximalbeschleunigung mit konstanter Steilheit mit dem Beschleunigungs-Moment ($M_2$), unabhängig von der Walzgutgeschwindigkeit und von dem Walzgutquerschnitt bis zum Schnittbeginn bei $t_3$. Die Scherengeschwindigkeit liegt bei diesem Schnittbeginn bereits oberhalb der Walzgutgeschwindigkeit ($v_M$) aber noch unterhalb der Scherensollgeschwindigkeit ($v_S$). Der beim Schnittbeginn einsetzende geringe Drehzahleinbruch bei $t_4$ wird durch das Aufbringen des Maximalmoments ($M_3$) minimiert und die Schere dabei weiter hochgefahren bis zur Scherensollgeschwindigkeit ($v_S$) bei $t_5$. Das ab hier bis zum Schnittende bei $t_6$ noch aufzubringende Moment ist von geringem Betrag und ist in der Fig. 4 mit ($M_4$) bezeichnet.

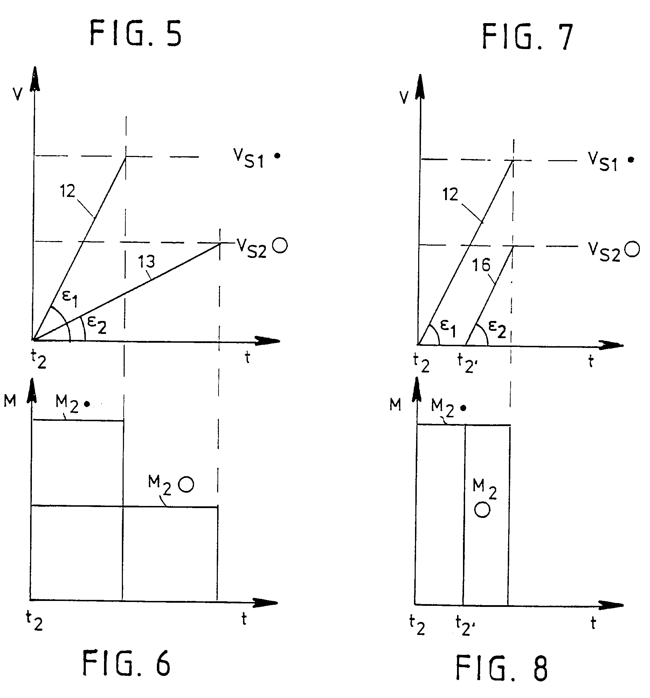

Die Vorteile der erfindungsgemäßen Maßnahmen und Merkmale werden anschaulich in den Figuren 5 bis 8 dargestellt, in denen die Beschleunigungsphasen der Schere für zwei unterschiedliche Walzgutgeschwindigkeiten und Walzgutquerschnitte aufgezeichnet sind. Für kleine Walzgutquerschnitte wurde dabei das Symbol eines kleinen Punktes (·) und für große Walzgutquerschnitte das Symbol eines großen Kreises (O) gewählt.

Hierbei zeigen die Figuren 5 und 6 das Hochfahren der Schere, wie es nach dem Stand der Technik üblich ist. Ausgehend von $t_2$ dem Beginn der Beschleunigung, resultiert für die hohe Geschwindigkeit ($v_{S1}$·), verbunden mit einem kleinen Walzgutquerschnitt (·), ein steiler Beschleunigungsweg (12) mit dem Winkel ($\varepsilon_1$) und für die langsame Geschwindigkeit ($v_{S2}$O) mit einem größeren Querschnitt (O) ein entsprechend flacherer Beschleunigungsweg (13) mit dem kleineren Winkel ($\varepsilon_2$). Bei gleichem Startpunkt $t_2$ und gleich langen Beschleunigungswegen (12 = 13) ergibt sich hierbei für den kleinen Walzgutquerschnitt (·) ein maximales Beschleunigungs-Moment ($M_2$·), während das Beschleunigungs-Moment ($M_2$O) für den großen Querschnitt (O) deutlich niedriger ist.

In den Figuren 7 und 8 sind bei gleichen Walzgutquerschnitten und Scherengeschwindigkeiten der Figuren 5 und 6 die entsprechenden Beschleunigungswege und die sich hieraus ergebenden Momente aufgezeichnet, die sich nach der Anordnung eines Schaltgetriebes zwischen dem Scherengetriebe und dem Antriebsmotor ergeben.

Für die hohe Geschwindigkeit ($v_{S1}$·) und dem kleinen Walzgutquerschnitt (·) ändert sich bei diesem Ausführungsbeispiel gegenüber den Figuren 5 und 6 nichts. Für die niedrige Geschwindigkeit ($v_{S2}$O) mit dem großen Walzgutquerschnitt (O) ergibt sich dagegen bei einem verschobenen Startzeitpunkt $t_2$, bei gleicher Steilheit ($\varepsilon_1 = \varepsilon_2$) ein deutlich verkürzter Beschleunigungsweg (16; 16 < 12) und genau wie beim kleinen Walzgutquerschnitt (·) ein maximales Beschleunigungs-moment ($M_2$O).

Durch die Zwischenschaltung eines Schaltgetriebes in den Antriebsweg der Schere ist es also möglich, unabhängig von der benötigten Scherengeschwindigkeit und von dem Walzgutquerschnitt stets mit einem maximalen Beschleunigungsmoment die Schere hochzufahren, wodurch beim Schnittbeginn das volle Moment zur Verfügung steht und ein optimaler Schnitt ohne gravierenden Drehzahleinbruch gewährleistet wird.

## Patentansprüche

1. Verfahren zum Betrieb von rotierenden Anlaufscheren im Start-Stop-Betrieb an Walzgut unterschiedlicher Geschwindigkeit in Draht-, Fein-, Mittelstahl - und Knüppelstraßen, bei dem die Anlaufschere, deren Getriebe (7) über eine Kupplung (10) mit einem Antriebsmotor (9) verbunden ist, aus der Ruhelage auf etwa Walzgeschwindigkeit beschleunigt und nach erfolgtem Schnitt wieder abgestoppt wird, **dadurch gekennzeichnet**, daß zwischen dem Scherengetriebe (7) und dem Antriebsmotor (9) ein Schaltgetriebe (8) angeordnet ist, wobei Scherengetriebe (7) und Schaltgetriebe (8) sowie Schaltgetriebe (8) und Antriebsmotor (9) jeweils über eine drehsteife Kupplung (10, 11) miteinander verbunden sind mit dessen Hilfe die Kombination folgender miteinander verknüpfter Arbeitsschritte durchgeführt werden:

   a) Anfahren der Schere mit geringem Antriebsmoment ($M_1$) (ca. 10 % des Nennmoments = 0,1 Mn) über den kurzen Zeitraum, der zur Eliminierung des Getriebe und Kupplungsspiels erforderlich ist, durchschnittlich über den Zeitraum von ca. 10 ms, danach

   b) konstante Beschleunigung der Schere mit maximaler Steilheit und maximalem Beschleunigungsmoment ($M_2$) auf die Scherensollgeschwindigkeit ($v_S$) für alle Walzgutgeschwindigkeiten und -querschnitte, wobei die Scherensollgeschwindigkeit ($v_S$) größer als die Geschwindigkeit des Walzgutes ($v_M$) gewählt ist (voreilende Schere),

   c) Beginn des Schnitts kurz vor Erreichen der Scherensollgeschwindigkeit ($v_S$) zu einem Zeitpunkt $t_3$, bei dem die Scherengeschwindigkeit bereits größer als die Geschwindigkeit des Walzgutes ($v_M$) ist,

   d) automatische Überwachung der Scherenmesser-Umfangsgeschwindigkeit während des Schnitts, um eine optimale Scherenvoreilung aufrechtzuerhalten.

2. Verfahren nach Anspruch 1, **dadurch gekennzeichnet**, daß die Meßsignale der Überwachung der Scherenmesser-Umfangsgeschwindigkeit zur Regelung der Scherenmesser-Umfangsgeschwindigkeit verwendet werden.

3. Verfahren nach Anspruch 1 oder 2, **dadurch gekennzeichnet**, daß zur Anpassung der maximalen Beschleunigung an die benötigte Scherensollgeschwindigkeit ($v_S$) der Startzeitpunkt $t_1$ der Schere entsprechend verschoben und damit der Beschleunigungsweg entsprechend verändert wird.

4. Verfahren nach Anspruch 1, 2 oder 3, **dadurch gekennzeichnet**, daß sich bei kurzen Beschleunigungswegen die Scherenmesser bis kurz vor dem Schritt in einer wärmegünstigen Warteposition befinden.

5. Vorrichtung zur Durchführung des Verfahrens nach einem oder mehreren der vorhergehenden Ansprüche mit einer rotierenden Anlaufschere, deren Getriebe (7) über eine Kupplung (10, 11) mit einem Antriebsmotor (9) gekoppelt ist, **dadurch gekennzeichnet**, daß zwischen dem Scherengetriebe (7) und dem Antriebsmotor (9) ein Schaltgetriebe (8) angeordnet ist, wobei Scherengetriebe (7) und Schaltgetriebe (8) sowie Schaltgetriebe (8) und Antriebsmotor (9) jeweils über eine drehsteife Kupplung (10, 11) miteinander verbunden sind.

6. Vorrichtung nach Anspruch 5, **dadurch gekennzeichnet**, daß an der Schere ein Meßgerät zur automatischen Überwachung der Scherenmesser-Umfangsgeschwindigkeit angeordnet ist, dessen Meßsignale in eine Regeleinheit zur Steuerung der Scherenmesser-Umfangsgeschwindigkeit während des Schnitts einfließen.

7. Vorrichtung nach Anspruch 5 oder 6, **dadurch gekennzeichnet**, daß das Schaltgetriebe (8) über mehr als zwei Schaltstufen verfügt.

8. Vorrichtung nach Anspruch 5 oder 6, **dadurch gekennzeichnet**, daß das Schaltgetriebe (8) stufenlos schaltbar ist.

## Claims

1. Method of operating rotating cropping shears in start-stop operation at roll stock of different speed in wire, refined steel, medium steel and billet roll trains, in which the cropping shears, the gear transmission (7) of which is connected with a drive motor (9) by way of a coupling (10), is accelerated from the rest setting to about rolling speed and is stopped again after a cut has been carried out, characterised in that a switching gear (8) is arranged between the shears gear transmission (7) and the drive motor (9), wherein the shears gear transmission (7) and switching gear (8) are connected together by way of a respective rotationally stiff coupling (10) and the switching gear (8) and drive motor (9) are connected together by way of a respective rotationally stiff coupling, with the assistance of which switching gear the combination of the following interlinked working steps is performed:

   a) starting up of the shears at low starting torque ($M_1$) (about 10% of the nominal torque = 0.1 Mn) over the short interval which is required for elimination of gear and coupling play, on average over the interval of about 10 ms, then

   b) constant acceleration of the shears with maximum steepness and maximum acceleration torque ($M_2$) to the shears target speed ($v_S$) for all roll stock speeds and cross-sections, wherein the shears target speed ($v_S$) is selected to be greater than the speed of the roll stock ($V_M$) (leading shears),

   c) beginning of the cutting shortly before attainment of the shears target speed ($v_S$) at an instant $t_3$ at which the shears speed is already greater than the speed of the roll stock ($v_M$), and

   d) automatic monitoring of the circumferential speed of the knives of the shears during the cutting in order to maintain an optimum leading of the shears.

2. Method according to claim 1, characterised in that the measurement signals of the monitoring of the circumferential speed of the knives of the shears are used for regulation of the circumferential speed of the knives of the shears.

3. Method according to claim 1 or claim 2, characterised in that for matching of the maximum acceleration to the required shears target speed ($v_S$) the start instant $t_1$ of the shears is appropriately displaced and thus the acceleration path is correspondingly changed.

4. Method according to claim 1, 2 or 3, characterised in that in the case of short acceleration paths the knives of the shears are disposed in a thermally favourable waiting position until shortly before the step.

5. Device for carrying out the method according to one or more of the preceding claims, with a rotating cropping shears, the gear transmission (7) of which is coupled with a drive motor (9) by way of a coupling (10), characterised in that a switching gear (8) is arranged between the shears gear transmission (7) and the drive motor (9), wherein the shears gear transmission (7) and switching gear (8) are connected together by way of a respective rotationally stiff coupling (10) and the switching gear (8) and drive motor (9) are connected together by way of a respective rotationally stiff coupling (11).

6. Device according to claim 5, characterised in that a measuring apparatus for automatic monitoring of the circumferential speed of the knives of the shears is arranged at the shears, the measurement signals of which flow into a regulating unit for control of the circumferential speed of the knives of the shears during the cutting.

7. Device according to claim 5 or 6, characterised in that the switching gear (8) has more than two switching stages.

**8.** Device according to claim 5 or 6, characterised in that the switching gear (8) is switchable steplessly.

**Revendications**

**1.** Procédé d'exploitation de cisailles rotatives d'éboutage en service marche-arrêt sur matières à laminer à différentes vitesses sur trains continus à fils, trains à fines tôles, trains de laminage intermédiaires et trains à billettes, selon lequel les cisailles d'éboutage, dont l'engrenage (7) est relié à un moteur d'entraînement (9) par un accouplement (10), qui est accéléré de la position de repos à env. la vitesse de laminage et qui une fois que la coupe est réalisée est à nouveau stoppé, **caractérisé en ce qu'** une transmission à changement de vitesses (8) est disposée entre l'engrenage des cisailles (7) et le moteur d'entraînement (9), sachant que l'engrenage des cisailles (7) et la transmission à changement de vitesses (8) ainsi que la transmission à changement de vitesses (8) et le moteur d'entraînement (9) sont respectivement reliés entre eux par un accouplement (10) rigide à la torsion, à l'aide duquel la combinaison des phases de travail suivantes reliées entre elles est exécutée :

a) Démarrage des cisailles avec un faible couple d'entraînement ($M_1$) (env. 10% du couple nominal = 0,1 Mn) durant le court laps de temps qui est nécessaire à l'élimination de l'engrenage et du jeu de l'accouplement, en moyenne durant un laps de temps de 10 ms env., ensuite

b) accélération constante des cisailles à la vitesse de consigne des cisailles ($v_s$) avec une pente maximum et un couple maximum d'accélération ($M_2$) pour toutes les vitesses et sections de matières à laminer, la vitesse de consigne des cisailles ($v_s$) étant choisie plus grande que la vitesse de la matière à laminer ($v_M$) (cisailles glissés en avant),

c) Commencement de la coupe peu avant l'atteinte de la vitesse de consigne des cisailles ($v_s$) à un moment $t_3$, auquel la vitesse des cisailles est déjà supérieure à celle de la matière à laminer ($v_M$),

d) surveillance automatique de la vitesse circonférentielle de la lame des cisailles pendant la coupe afin de maintenir un glissement optimal en avant des cisailles.

**2.** Procédé selon la revendication 1, **caractérisé en ce que** les signaux de mesure du contrôle de la vitesse circonférentielle de la lame des cisailles soient utilisés pour la régulation de la vitesse circonférentielle de la lame des cisailles.

**3.** Procédé selon la revendication 1 ou 2, **caractérisé en ce que** pour l'adaptation de l'accélération maximum à la vitesse de consigne requise des cisailles ($v_s$) le point de départ $t_1$ des cisailles soit déplacé de façon correspondante et par suite le chemin d'accélération soit modifié conformément.

**4.** Procédé selon la revendication 1, 2 ou 3, **caractérisé en ce** qu'en cas de courtes distances d'accélération, les lames des couteaux se trouvent dans une position d'attente avantageuse du point de vue thermique jusqu'à peu avant la coupe.

**5.** Appareillage pour l'exécution du procédé selon l'une ou plusieurs revendications précédentes avec des cisailles rotatives d'éboutage, dont l'engrenage (7) est relié à un moteur d'entraînement (9) par un accouplement (10), **caractérisé en ce** qu'une transmission à changement de vitesses (8) soit disposée entre l'engrenage des cisailles (7) et le moteur d'entraînement (9), l'engrenage des cisailles (7) et la transmission à changement de vitesses (8) ainsi que la transmission à changement de vitesses (8) et le moteur d'entraînement (9) soient reliés respectivement entre eux par un accouplement résistant à la torsion (10, 11).

**6.** Appareillage selon la revendication 5, **caractérisé en ce** qu'un appareil de mesure soit disposé sur les cisailles pour le contrôle automatique de la vitesse circonférentielle de la lame de cisailles, dont les signaux de mesure vont dans une unité de réglage pour la commande de la vitesse circonférentielle des lames de cisailles pendant la coupe.

**7.** Appareillage selon la revendication 5 ou 6, **caractérisé en ce** que la transmission à changement de vitesses (8) dispose de plus de deux vitesses.

**8.** Appareillage selon la revendication 5 ou 6, **caractérisé en ce** que la transmission à changement de vitesses (8) soit commutable en continu.

FIG. 1

FIG. 2

FIG. 3

FIG. 4

# FIG. 5

# FIG. 7

# FIG. 6

# FIG. 8